# EUROPEAN PATENT APPLICATION

(11) **EP 1 267 312 A1**
(43) Date of publication of application: **18.12.2002**
(21) Application number: 01810532.0
(22) Date of filing: 01.06.2001
(51) Int. Cl.: G07F 7/10, G06F 17/60

(54) **A method for performing a secure cashfree payment transaction and a cashfree payment system**

(71) Applicant: Hauser, Ralf, 8053 Zürich (CH)
(72) Inventor: Hauser, Ralf, 8053 Zürich (CH)
(74) Representative: Clerc, Natalia

(57) **Abstract**

A method for performing a cash-free payment transaction that comprises:
a) a provider (PPPP) receives a pre-authorization message (2') for a payment made by a buyer (B), the pre-authorization message being authenticated for example by a personal identification number
b) the provider (PPPP) generates a payment nonce in response to this pre-authorization message
c) the provider (PPPP) forwards this payment nonce (3') to the buyer (B) and
the provider (PPPP) approves the payment when asked or when being debited by a seller (S') interface. The method further comprises that the above mentioned steps are performed by a private pre-authorization and payment provider (PPPP) and that the provider (PPPP) accepts a pre-authorization message being sent by a buyer's personal trusted device (PTD) being independent of the seller's interface and that the provider (PPPP) generates the payment nonce in a form which can be read by the seller's interface.

This method using a personal trusted device (PTD) to obtain a nonce that protects privacy and prevents fraud being at the same time flexible enough to be used in different kind of transactions, even in off-line transactions.

## Description

### Field of the invention

The invention relates to a method for performing a secure cash-free payment transaction and a cash-free payment system in accordance with the preamble of claim 1 and claim 11 respectively.

### Description of the Prior Art

There are a number of factors leading to an increased potential for abuse of people's personal and payment information and payment fraud, such as credit card fraud. With the growing acceptance of e-commerce and technologies to collect, store, sort, and analyze data, there are increasing threats in this respect. Unfortunately, these concerns limit the growth of commerce on-line and also off-line and the acceptance of new technologies that benefit both consumers and businesses. For example, using credit cards to make payments has enormous potential, but concerns about personal privacy and potential fraud greatly hinders acceptance and use thereof.

It is known in the prior art to use credit card verification systems. It is also known, that the best way to ensure that credit card numbers cannot be used fraudulently is to never transmit the credit card number by any direct route, i.e. phone, mail, Internet or in written form.

US-A-6'029'890 therefore suggests to use credit card numbers specifically tailored for one single purchase. A credit card owner has to request this special credit card number using an automated teller machine, where he has to enter a personal identification code, the desired credit limit for the expected financial transaction, the vendor number the credit must be sent at and a wanted expiration date shortly after the transaction due date. The automated teller machine is connected with a bank control system, the bank control system being connected to a credit provider. The credit provider is connected to vendor credit card interfaces. The bank control system asks, after having approved the desired credit limit, the credit provider for an individual credit card number, which is transmitted to the credit card owner from the credit card provider through the bank control system and through the automated teller machine. The credit card owner then has to type the credit card number into the credit card interface at the vendors place to authorize the financial transaction or to transmit the individual credit card number to the vendor.
This method bears several disadvantages. First of all, the credit card owner has to find an automated teller machine. Usually, automated teller machines are not provided in shops, enforcing the buyer to leave the shop and to search a teller machine after having chosen a product to buy. This complicates the buying transaction and can especially not be used in environments not being familiar to the customer, for example as they are encountered by the customer when being on vacation. Furthermore, the communication is quite complicated, involving teller machines, bank control systems and credit card providers. This will also be even more complicated when the customer is abroad, i.e. when the local bank control system may not be connected to the bank control systems normally used by the customer.

WO 00/49586 also suggests to use limited-use credit card numbers. In this system, a pool of credit card numbers are maintained which share identical formatting. One of these credit card numbers is assigned to be a master credit card number, the others are assigned to be limited-use credit card numbers. The limited-use credit card numbers are sent to the credit card owner en-bloc, for example on a list or on individual credit cards. However, these numbers are not yet activated, but can be activated by the credit card owner when he wants to perform a financial transaction. To activate a card, the owner has to communicate with the credit card issuer before using it in a transaction. This systems also seems to be quite complicated, since the credit card owner has to book-keeping the credit card numbers already used and the one still being available. Furthermore, instead of carrying with him one single credit card he has to cope with several of them or at least with several numbers.

### Summary of the invention

It is therefore an object of the invention to provide a method for performing a secure cash-free payment transaction and a cash-free payment system, which enables a secure transaction in a simpler way and which can be used with different paying systems.

This object is achieved with a method for performing a secure cash-free payment transaction and a cash-free payment system with the features of claim 1 and claim 11 respectively.

The inventive method for performing a secure cash-free payment transaction and the inventive cash-free payment system allow a buyer to obtain a pre-authorization for payments privately on a buyer controlled channel, preferably a mobile phone or another wireless device, and then complete payment for a transaction in an online or offline environment. In the pre-authorization a one-time credit card number or another nonce is obtained from a private pre-authorization and payment provider chosen by the buyer and the transaction is made with this nonce. Since the pre-authorization channel is separated from channels used and controlled by sellers, absolute privacy for the buyer is guaranteed. He has not to disclose any private information which would enable the seller to identify him.

The use of a wireless device, especially a mobile phone, for communicating with the provider enables an easy way of communication, which can be used by the buyer on all places of the world.

Furthermore, the use of a wireless device also renders the payment system flexible. The same system can be used with different kind of seller's payment systems.

### Brief description of the drawings

The present invention will be more readily understood upon reading the following detailed description in conjunction with the drawings in which:
- Figure 1: shows a cash-free payment system with a proxied on-line internet transaction;
- Figure 2: shows a cash-free payment system with a transaction where a regular credit card is used to pay the seller thus the seller infrastructure is unchanged;
- Figure 3: shows a first variant of a cash-free payment system without using a credit card and a changed seller infrastructure and
- Figure 4: shows a second variant of a cash-free payment system without using a credit card a changed seller infrastructure.

### Description of the preferred embodiments

The inventive method can be used in different payment systems, such as on-line and off-line systems, systems requiring credit card numbers and systems working with other kind of identification numbers. In the following, the inventive method and the inventive cash-free payment system are described in use with some of these payment systems.

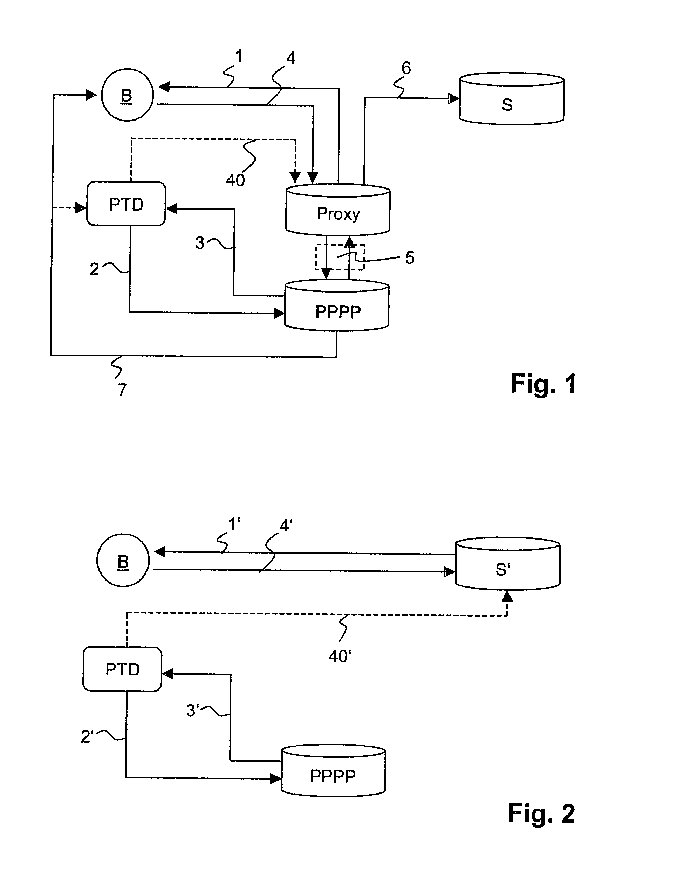

Based on this figure 1, a first variant of the inventive method for performing a secure credit card transaction is described, wherein the purchase is handled using e-commerce.

In the first step 1, a buyer B shops via Internet in an eStore S using a proxy. The proxy is an entity, that enables private e-commerce transactions by providing protection of personal and payment information during all transaction steps. It means during pre-sales, i.e. browsing, during check-out, during fulfillment and after sales. During check-out, the Proxy's credit card is presented to the eStore and not the customer's. During fulfillment the proxy can guarantee private shipping as a premium service. After sales, follow-up e-mails are sent in an anonymous way as well as phone support is guaranteed via anonymous phone relay or a private call center. Due to its uniform checkout across eStores, it can enable groups of sellers or eStores S for new methods of payment without requiring the seller to support that method of payment itself. Shopping through proxy includes any and all of the following:
(i) shopping through a proxy's privacy portal;
(ii) shopping through a privacy portal created by the proxy for a third party;
(iii) shopping through a third party that uses the proxy's systems; or
(iv) shopping at a third party, such as a seller, that provides a link to the proxy that allows for some form of private check-out.

When the buyer B has chosen an item to buy, he has to pay the proxy before it allows for delivering. At this final check-out page, the proxy provides a card-type in addition to the known credit card types such as Visa, MasterCard and American Express. This additional card-type is related to a private pre-authorization and payment provider PPPP described later-on. This card-type also requires a number, which can adhere to the common credit card format. It can also have a different format, such as a cryptographic string or a phone number.

If the buyer B chooses to use the provider PPPP, he needs a personal trusted device PTD. With this device PTD he requests in a second step 2 a single transaction credit card number or another nonce from the provider PPPP. The PTD device is a device used to store information on behalf of the user and communicate over various channels. Preferably, it is a wireless phone. It can also be a Web-enabled palm pilot or the personal, internet-connected PC of the buyer B. The user preferably keeps control over the PTD device altogether with a device access password.

With this PTD device he submits the purchase amount securely to the PPPP. Securing such a link is a well-understood art: One embodiment would require the user to use some form of security, such as a personal identification number, i.e. a PIN, or a one-time PIN from a list previously obtained from the PPPP in a secure way. If a PTD is programmable, any kind of secure sign-on/password authentication protocol could be used instead. For the submission of this information to the provider PPPP, several methods can be used:
a) a wireless data transmission method protected by a wireless transport layer security standard, such as WTLS, an "always-on" packet-switched GPRS, a connection-based WAP, or later generation standards such as UMTS;
b) a short message service message such as SMS or a WAP notification or
c) a voice channel reaching an integrated voice response unit. The last method has the advantage that there is some degree of confidentiality for voice calls while the security implementations of WAP gateways and browsers are only partially complete at best, i.e. end-to-end WTLS or reliable WTLS to SSL translation is not generally available yet.

In a third step 3, the provider PPPP authorizes the transaction and creates a time-limited number or one-time number, called nonce, for payment as well as an expiration date. In a variant of the invention, both adhere to the credit card format thus including also a cardholder name that is unrelated to the buyer's name.
This nonce and the expiration date is sent to the PTD device of the buyer B.
The provider PPPP is an entity known to the buyer B, the provider having access to the personal data of the buyer B enabling the provider PPPP to authorize financial transactions. The provider PPPP can be an issuing bank that provides credit cards. For purposes of this invention, providers PPPP could also include the proxy, cellular service providers, or any other entity that can effectively bill many customers.

The nonce sent to the buyer must have the following properties: It has to be i) fresh or recent, ii) hard to guess, iii) unique and iv) have a value limited to the transaction amount.

In a fourth step, the buyer B enters the nonce into the proxy checkout page and resumes the transaction. If the PTD device and the buyer's B computer enabling the Internet access have a way of electronically communicating, for example by means of a short-range infrared protocol (BlueTooth, etc.), the nonce could be transmitted without the end-user needing to remember and reproduce it, as shown in figure 1 with the dashed line 40..
As long as there is still a need for the user to tell, type or otherwise transmit this number at any time during the execution of the protocol, the nonce should be human readable and memorizable.

If a nonce is to be emulated with real credit card numbers the following method is preferably used: The PPPP reserves itself a large pool of credit card numbers, preferably a bank identifier number BIN. A BIN represents many millions of valid credit card numbers. Because sellers are not always capable of shipping the entire set of goods purchased in one package, the velocity must not be limited to one but a small number unless the PPPP can tailor to the characteristics of the seller at hand. This allows for partial shipments, authorizations, and settlements. Unused pre-authorizations shall be expired by setting back the "open-to-buy" value to zero after a grace period. Normal credit cards furthermore do not show the above mentioned properties i) and iv). The preferred method to achieve these two properties is to set the "open to buy" value, i.e. the available credit, to zero by default and only in the course of the protocol set it to the transaction amount in real time achieving property iv). If the card issuer is unable to perform such a real-time update of their card-base, the PPPP anticipates the expected transaction amounts and randomly distributes them over the available card pool in batch mode prior to the usage of the cards. In the course of the protocol, the transaction amount will be one of the key determining factors for selecting the nonce out of the pool of unused card numbers. After the usage of the card number for a transaction, its "open-to-buy" value will be reset to zero and it will not be used for an amount of time that is hard to predict until it re-enters the pool of available good card numbers, thus approximating the above mentioned property i). Therefore, all parties that have seen a card used in a transaction before are unlikely to be able to re-use it in an illegitimate way because it is hard to guess when it becomes usable again. The management of a card pool according to this method will yield heuristics that allow efficient pre-allocation of open to buy amounts and short recycle times while keeping fraud minimal.

In a fifth step 5, the proxy routes the authorization requests depending on the credit card type: regular cards go to proxy's credit card merchant bank, whereas PPPP transactions go to the appropriate PPPP through a state-of-the-art secure connection, such as XML over https, and are processed in the similar way as regular seller authorizations and settlements.

After successful authorization a regular proxy check-out is executed on behalf of the buyer B, using the single transaction credit card number obtained from the PPPP, as shown in figure 1 with reference number 6.

In a last step 7, the provider PPPP sends the buyer B a receipt via e-mail, SMS, a WAP-push or alike containing an authenticator for potential subsequent customer service interactions. For example, the last five digits of the nonce are used. Preferably, this receipt is electronically signed by the provider PPPP and if available encrypted with a buyer's public key. In a first variant, the receipt is sent to the buyer B over another channel than the PTD device to further minimize fraud. In a second variant, it is sent over the PTD device.

In another variant of the inventive method, a cryptographically more secure method is used: in the third step 3, the nonce sent to the buyer B by the provider PPPP is computed as a hash of the receipt. Then, in this last step 7, the receipt is sent to the buyer B. The buyer B hashes the receipt and compares it to the number mentioned above.

In the above-mentioned method, the buyer B has never disclosed his real credit card number on the Internet. If the provider PPPP settles with the buyer B directly, no credit card is used at all.

Based on figure 2, it will now be described how the inventive idea is used in a transaction, wherein a regular credit card is used to pay the seller thus the seller infrastructure is unchanged.

When the buyer B has made his decision of a product to buy, he is presented in a first step 1' with the amount to be paid by a seller S'. This seller S' can now be either a physical store, contacted physically by the buyer or an eStore contacted through Internet. In the latter case, the contact has been established directly, not using a proxy. Optionally, the seller can also give the buyer B, in addition to the amount due, a merchant category code, a seller or seller location identification or the like as well.

In a second step 2' he uses his PTD device to ask for a one-time credit card number or another nonce. This step is similar to the second step 2 described in the on-line transaction. In addition this request step also contains at least the following options to choose from regarding complementary information to be returned:
a) no billing and shipping information is needed;
b) provide the provider PPPP billing address to preserve the privacy of the buyer's billing address;
c) provide the provider PPPP billing address and a private shipping address or
d) assign the buyer's billing or another verified address to the nonce. This is for the case that the seller S' will only ship to the billing address. If the buyer B is highly trusted by the provider PPPP, also an arbitrary shipping address could be made the billing address of the nonce. The provider PPPP also may maintain an address book on the behalf of the buyer B.

In a preferred variant, the usability of the nonce to be provided is restricted further here by specifying the seller category or even the exact seller name, the exact seller location, or a product identification.

In a third step 3', the nonce is sent to the buyer B in the form of a valid credit card number. Furthermore, in response to the choice made in the second step 2', the information provided can be complemented with a corresponding billing address compliant with an address verification system, such as AVS, and/or a private shipping address. All this information is preferably presented in such a way that form-filling applications such as Gator can easily pick it up and re-use it to fill the checkout form at an arbitrary seller. In one embodiment, this could be achieved by presenting all the information in this flow also as hidden HTML input fields optionally named according to the ECML standard. Additionally the form-filler could maintain a history of how the one-time cards were deployed on behalf of the user. Initially, this will mainly be relevant for the situation where the nonce is requested from a computer tied to the Internet. Once form-fillers go wireless the equivalent of hidden HTML input fields can be provided (e.g. "setvar" in WML).

In a fourth step 4', the buyer B uses the nonce to complete his transaction. As mentioned above, this can be phone orders, eStores' Internet checkouts or a physical appearance in a traditional store. The latter stores are normally equipped with a credit card interface. These interfaces usually have a keyboard for entry of a credit card number and an expiration date in case of malfunctioning magnetic stripes. If the PTD device and the credit card interface terminal have a way of electronically communicating as mentioned above, the nonce can be transmitted without the buyer B needing to remember and reproduce it. This is shown in figure 2 with a dashed line 40'. The transaction then continues like a regular credit card transaction at the seller S'.

The inventive method also enables financial transactions without using credit cards. In this case the seller S'', S''' has to be able to route to the provider PPPP without using the standard payment backbone formats or infrastructure in place or that the seller's S'', S''' infrastructure and the underlying payment backbone can be changed to bring a transaction authorization to the seller S'', S''' without the seller S'', S''' obtaining information authenticating the buyer B.

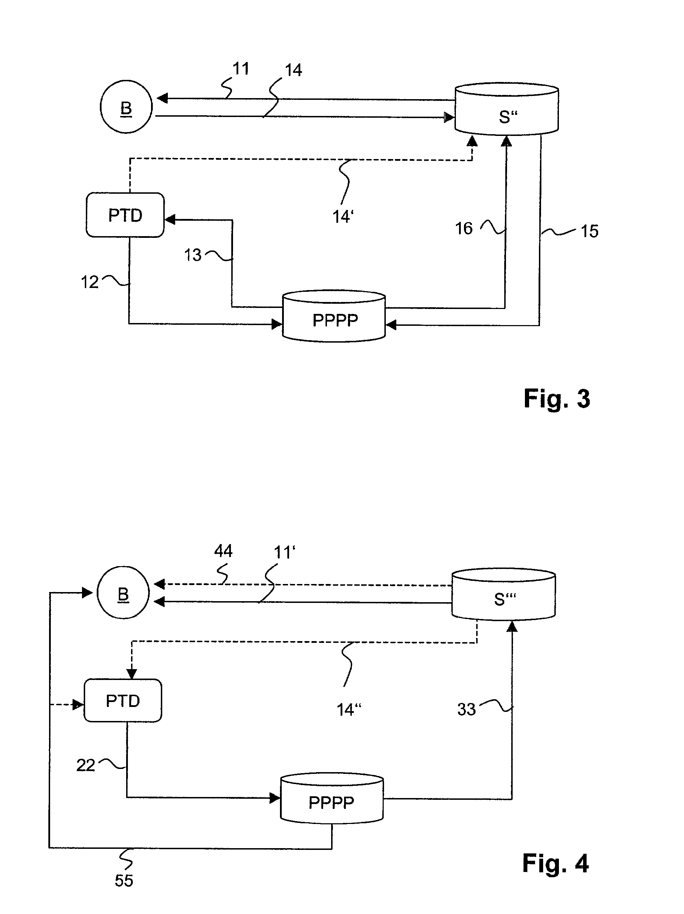

Based on figure 3, it will now be described how the inventive idea is used in a first variant of a transaction, where the buyer B is not using a credit card with the seller.

This variant is advisable among other if the provider PPPP is unable to secure a large enough pool of credit card numbers to emulate nonces.

The first to fourth steps 11,12,13,14,14' are identical to the first to fourth steps 1,2,3,4,40 of the method shown in figure 1. In the fifth step 15, the seller S'' or the seller's bank presents the nonce to the provider PPPP. This implies additional routing in the credit card backbone or a separate routing infrastructure for the nonces. In a sixth step 16 the provider PPPP authorizes the nonce like a regular issuing bank enabling the transaction to be finished.

Based on figure 4, it will now be described how the inventive idea is used in a second variant of a transaction, where the buyer B is not using a credit card with the seller.

In a first step 11', where the buyer B has made his decision, he obtains a routing identifier, for example in the form of a telephone number, from the seller S'''. This information can for example be displayed on its credit card interface. Similarly to the previous step 40, this number could be transmitted from the seller S to the PTD without B needing to remember and re-type it (step 14''). In a second step 22 the identifier and the amount are entered into the PTD device and sent to the provider PPPP. In the third step 33, the provider PPPP authorizes it and pushes this authorization information to the seller S'''. The seller S''' releases in a fourth step 44 the goods and in a fifth step 55, the provider PPPP sends the buyer B or its PTD device a receipt with at least 5 digits as placeholders for the credit card number to access Proxy customer service.

The inventive method for performing a private and secure payment transaction and the inventive payment system using a personal trusted device to obtain a nonce protect privacy and prevent fraud being at the same time flexible enough to be used in different kind of transactions.

## Claims

1. A method for performing a cash-free payment transaction wherein
a) a provider receives a pre-authorization message for a payment to be made by a buyer, the pre-authorization message being authenticated by a personal identification token
b) the provider generates a payment nonce in response to this pre-authorization message
c) the provider forwards this payment nonce to the buyer and
d) the provider approves the payment when asked or when being debited by a seller interface,
**characterized in**
**that** the above mentioned steps are performed by a private pre-authorization and payment provider PPPP,
**that** the PPPP accepts a pre-authorization message being sent by a buyer's personal trusted device being independent of the seller interface and
**that** the PPPP generates the payment nonce in a form which can be read by the seller interface.

2. The method of claim 1, wherein the pre-authorization message is sent by a mobile phone.

3. The method of claim 1, wherein the pre-authorization message is received by the PPPP through wireless data transmission such as SMS, GPRS or WAP notify.

4. The method of claim 1, wherein the payment nonce is sent to the buyer's personal trusted device using wireless data transmission such as SMS or voice.

5. The method of claim 1, wherein the payment nonce is complemented in a way re-deployable for form filling applications by a private billing address without a reference to a buyer's real billing address that is compatible with the AVS and/or a private shipping address for use in an anonymous shipping service.

6. The method of claim 1, wherein the payment nonce is received by the seller through one of the group of wireless data transmission, electronic communication and manual data entering through a keyboard.

7. The method of claim 5, wherein the payment nonce is received by the seller from the buyer or from the provider or the proxy.

8. The method of claim 1, wherein the provider generates the payment nonce when having received the pre-authorization message comprising at least a seller identification.

9. The method of claim 1, wherein the provider generates a payment nonce when having received an information concerning the sellers interface, the form of the payment nonce being dependent on the sellers interface.

10. The method of claim 1, wherein the provider generates as a payment nonce at least one of the group of a credit card number and another credit identification number.

11. A cash-free payment system comprising
a) means to receive a pre-authorization message for a payment made by a buyer and to validate an authentication token sent with this message,
b) means to generate a payment nonce in response to this pre-authorization message
c) means to forward the payment nonce to the buyer and
d) means to approve the payment when asked or when being debited by a seller interface,
**characterized in**
**that** the means are part of a private pre-authorization and payment provider PPPP,
**that** the means to receive a pre-authorization message accepts a message being sent by a buyer's personal trusted device being independent of the seller interface and
**that** the means to generate the payment nonce generate it in a form which can be read by the seller's interface.
